# EUROPEAN PATENT SPECIFICATION

(11) **EP 3 607 471 B1**
(45) Date of publication and mention of the grant of the patent: **08.05.2024**
(21) Application number: 18720440.9
(22) Date of filing: 29.03.2018
(51) Int. Cl.: G06F 16/22, G06F 16/23

(54) **MANAGEMENT OF CO-OWNERSHIP DATABASE SYSTEM**
VERWALTUNG DER MITEIGENTÜMERSCHAFT EINES DATENBANKSYSTEMS
GESTION DE SYSTÈME DE BASE DE DONNÉES EN COPROPRIÉTÉ

(30) Priority: 07.04.2017 CN 201710225547
(43) Date of publication of application: 12.02.2020
(73) Proprietor: Microsoft Technology Licensing, LLC, Redmond, WA 98052-6399 (US)
(72) Inventor: YAN, Ying, Redmond, Washington 98052-6399 (US); MOSCIBRODA, Thomas, Redmond, Washington 98052-6399 (US); CHEN, Yang, Redmond, Washington 98052-6399 (US); LIU, Qi, Redmond, Washington 98052-6399 (US)
(74) Representative: CMS Cameron McKenna Nabarro Olswang LLP
(86) International application number: PCT/US2018/024989
(87) International publication number: WO 2018/187133

(56) References cited:
- US-A1- 2016 162 897
- Trent Mcconaghy ET AL: "BigchainDB: A Scalable Blockchain Database", , 8 June 2016 (2016-06-08), XP055340139, Retrieved from the Internet: URL:https://www.bigchaindb.com/whitepaper/ bigchaindb-whitepaper.pdf

## Description

### BACKGROUND

With the development of database technologies and network technologies, databases are no longer limited to be deployed locally at users, but may be deployed in other positions such as clouds. Databases may be deployed and utilized at least partially in a distributed way. At this point, users do not care about the deployment mode of storage devices within a cloud database, but may access data in the database via an access interface provided by the cloud database. Existing cloud databases only assume a single member as the owner of the database. As the emergence of multiparty collaboration, members of existing cloud databases wish to share data with others. However, it is difficult for multiple members to elect a single reliable member as the owner of the database through negotiation. Thereby, existing cloud databases cannot satisfy the demand of multiple members on data sharing.

To achieve a co-ownership database between multiple members, blockchain-based databases have been proposed so far. Nevertheless, traditional blockchains fail to well support the management of multi-user shared database systems in respects of data migration, execution efficiency and the like.
Trent Mcconaghy et al: "BigchainDB: A Scalable Blockchain Database" (8 June 2016, XP055340139, retrieved from the Internet URL: https://www.bigchaindb.com/whitepaper/bigchaindb-whitepaper.pdf) describes BigchainDB, a "big data" distributed database embodying blockchain characteristics.
These characteristics are particularly a decentralized control, where "no one" owns or controls a network, immutability, where written data is tamper-resistant ("forever"), and the ability to create & transfer assets on the network, without reliance on a central entity. The BigchainDB system presents its API to clients as if it is a single blockchain database. It comprises two distributed databases, a first one as a backlog of transactions (database S) and a block chain database (database C) in which the transactions are moved into blocks, managed by a BigchainDB Consensus Algorithm (BCA). The BCA runs on each signing / voting node. Non-signing clients may connect to BigchainDB; depending on permissions they may be able to read, issue assets, transfer assets, and more. Decentralized control is achieved via a DNS-like federation of nodes with voting permissions. For speed, each block is written before a quorum of signing nodes validates and votes on it. Chainification actually happens at voting time. A "decided_invalid" block found invalid by a quorum of nodes is kept in the block chain database, as disk space is not a problem.

### SUMMARY

According to aspects of the present invention there is provided a device, method, media as defined in the accompanying claims. In accordance with implementations of the present disclosure, a solution for managing a co-ownership database system is provided In this solution, multiple members access the database system as the co-owner thereof. The database system comprises: an underlying database for storing data of multiple members of the database system, a rule set defining constraints on operations of the multiple members over the database system, and a blockchain storing a record of an operation history of the database system. In response to receiving a data accessing request from one of members, the accessing request will be verified based on the rule set. Subsequently, the accessing request will be processed according to a result of the verification.

The invention is defined by the features of the independent claims. Further embodiments are the subject-matter of the dependent claims.

### BRIEF DESCRIPTION OF THE DRAWINGS

Fig. 1 illustrates a block diagram of a computing environment in which implementations of the present disclosure can be implemented;
Fig. 2 illustrates a block diagram of a database system according to one implementation of the present disclosure;
Fig. 3 illustrates a flowchart of a method for managing a database system according to one implementation of the present disclosure;
Fig. 4 illustrates a flowchart of a method for setting a rule set according to one implementation of the present disclosure;
Fig. 5 illustrates a block diagram of accessing a co-ownership database system by multiple members according to one implementation of the present disclosure;
Fig. 6 illustrates a schematic view of a Merkle tree-based index according to one implementation of the present disclosure;
Fig. 7 illustrates a schematic view of a Merkle tree-based index according to one implementation of the present disclosure; and
Fig. 8 illustrates a schematic view of a Merkle tree-based index according to one implementation of the present disclosure.

Throughout the drawings, the same or similar reference symbols refer to the same or similar elements.

### DETAILED DESCRIPTION

The present disclosure will now be discussed with reference to several example implementations. It is to be understood these implementations are discussed only for the purpose of enabling those skilled persons in the art to better understand and thus implement the present disclosure, rather than suggesting any limitations on the scope of the present disclosure.

As used herein, the term "includes" and its variants are to be read as open terms that mean "includes, but is not limited to." The term "based on" is to be read as "based at least in part on." The term "one implementation" and "an implementation" are to be read as "at least one implementation." The term "another implementation" is to be read as "at least one other implementation." The terms "first," "second," and the like may refer to different or same objects. Other definitions, explicit and implicit, may be included below.

### Example Environment

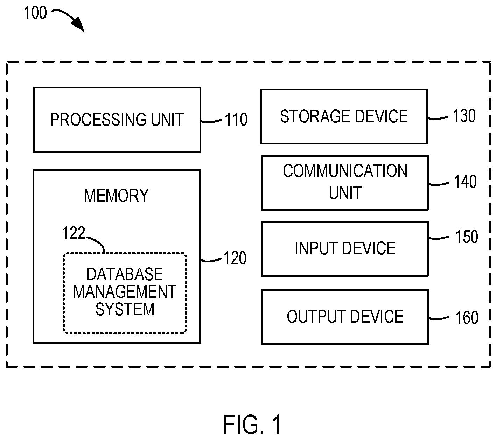

Basic principles and various example implementations of the present disclosure will now be described with reference to the drawings. Fig. 1 illustrates a block diagram of a computing device 100 in which implementations of the present disclosure can be implemented. It would be appreciated that the computing device 100 illustrated in Fig. 1 is merely for illustration and not limit the function and scope of implementations of the present disclosure in any manners. As shown in Fig. 1, the computing device 100 includes a computing device 100 in form of a general computer device. Components of the computing device 100 include, but are not limited to, one or more processors or processing units 110, a memory 120, a storage device 130, one or more communication units 140, one or more input devices 150, and one or more output devices 160.

In some implementations, the computing device 100 may be implemented as various user terminals or service terminals. The service terminals may be large-scale computing device and servers provided by various service providers, etc. The user terminals may be, for example, any type of mobile terminals, stationary terminals or portable terminals, including mobile phones, stations, cells, devices, multimedia computers, multimedia tablets, Internet nodes, communicators, desktop computers, laptop computers, notebook computers, network computers, tablet computers, personal communication system (PCS) devices, personal navigation devices, personal digital assistants (PDA), audio/video players, digital cameras/video cameras, positioning devices, TV receives, radio broadcast receivers, ebook devices, game devices or any combinations thereof, including accessories and peripherals of these devices or any combinations of. It may be further anticipated that the computing device 100 can support any type of interfaces (such as "wearable" circuits, etc.) to users.

A processing unit 110 can be a physical or virtual processor and can execute various processes based on the programs stored in the memory 120. In a multi-processor system, multiple processing units execute computer-executable instructions in parallel to improve the parallel processing capacity of the computing system/server 102. The processing unit 110 may also be referred to as a central processing unit (CPU), microprocessor, controller, or microcontroller.

The computing device 100 typically includes a plurality of computer storage media, which can be any available media accessible by the computing device 100, including but not limited to volatile and non-volatile media, and removable and non-removable media. The memory 120 can be a volatile memory (for example, a register, cache, Random Access Memory (RAM)), non-volatile memory (for example, a Read-Only Memory (ROM), Electrically Erasable Programmable Read-Only Memory (EEPROM), flash memory), or any combination thereof. The memory 120 includes one or more program products so as to implement a database management system 122 for managing a co-ownership database system. The management engine has one or more sets of program modules configured to perform functions of various implementations described herein. The storage device 130 can be any removable or non-removable media and may include machine-readable media, such as a memory, flash drive, disk, and any other media, which can be used for storing information and/or data 170 and accessed in the computing system/server 102.

The computing device 100 may further include additional removable/non-removable, volatile/non-volatile memory media. Although not shown in Fig. 1, a disk drive is provided for reading and writing a removable and non-volatile disk and a disc drive is provided for reading and writing a removable non-volatile disc. In such case, each drive is connected to the bus (not shown) via one or more data media interfaces.

The communication unit 140 communicates with a further computing device via communication media. Additionally, functions of components in the computing device 100 can be implemented by a single computing cluster or multiple computing machines connected communicatively for communication. Therefore, the computing device 100 can be operated in a networking environment using a logical link with one or more other servers, network personal computers (PCs) or another general network node.

The input device 150 may include one or more input devices, such as a mouse, keyboard, tracking ball, voice-input device, and the like. The output device 160 may include one or more output devices, such as a display, loudspeaker, printer, and the like. As required, the computing system/server 102 can also communicate via the communication unit 140 with one or more external devices (not shown) such as a storage device, display device and the like, one or more devices that enable users to interact with the computing system/server 102, or any devices that enable the computing system/server 102 to communicate with one or more other computing devices (for example, a network card, modem, and the like). Such communication is performed via an input/output (I/O) interface (not shown).

### Example of Co-Ownership Database System

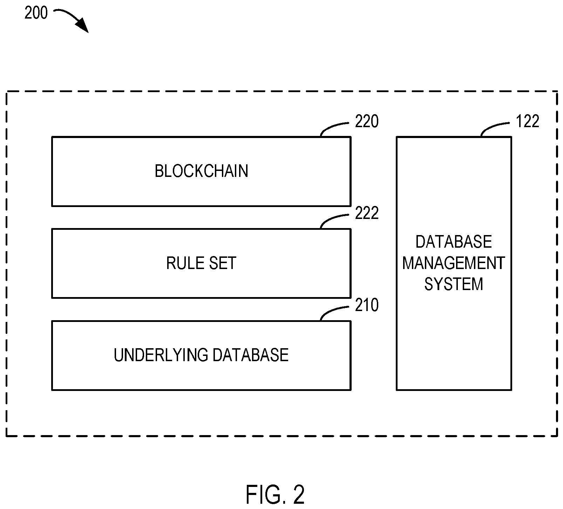

Fig. 2 illustrates a block diagram of a database system 200 according to one implementation of the present disclosure. As shown in Fig. 2, according to the implementation of the present disclosure, the database system 200 may comprise an underlying database 210, a blockchain 220, a rule set 222 and a database management system 122. The database management system described here may serve as an interface between the database system 200 and the outside. Multiple members as the co-owner of the database system 200 may access data in the database system 200 via the database management system 122. In one implementation, the underlying database 210 may be a cloud database deployed in the cloud. Alternatively, the underlying database 210 is for storing data of multiple members and may be deployed in other position in a centralized or distributed way. In addition, the underlying database 210 may adopt any one or more of various database models, for example, may be either a relational database or a non-relational database.

In the context of the present disclosure, multiple members trust the reliability of the underlying database 210, whereas they do not trust each other. In other words, from the perspective of any member, other members might tamper data in the database system 200. Therefore, corresponding permissions need to be set to various members for the access to the database system. To this end, according to implementations of the present disclosure, a rule set 222 is set for defining constraints of multiple members on one or more manipulations of the database system. In this way, permissions of various members may be defined by the rule set 222, and further data sharing is realized among multiple members.

As will be understood, though the rule set 222 is shown as independent of the blockchain 220 and the underlying database 210 in Fig. 2, in other implementations the rule set 222 may be deployed in the blockchain 222 or stored in a way similar to the underlying database 210.

As well known, blockchain technology is a decentralized storage technology, and blockchain data structures provide traceable and verifiable integrity. Therefore, by storing the manipulation history about the database system in the blockchain 220, the trustworthiness of the manipulation history can be guaranteed by using the reliability of the blockchain technology. Furthermore, when an accessing request from a given member is considered suspicious, whether the accessing request is trustworthy is further confirmed based on the manipulation history in the blockchain.

In one implementation, when the rule set 222 is stored in the blockchain 220, the rule set 222 can be fast and conveniently deployed based on the blockchain technology, and the manipulation history with respect to the rule set 222 is naturally stored in the blockchain 220. Based on the manipulation history, subsequently it can be confirmed whether various accessing requests to the rule set 222 are trustworthy. The implementation of the present disclosure can take security and efficiency into account. As will be understood, the response speed of the underlying database 210 is usually higher than that of the blockchain. By storing data of multiple members to the underlying database 210, it may be ensured the underlying database 210 has a higher response speed and thus can fast respond to data accessing requests of members. On the other hand, since the rule set 222 has a small data amount and is easily manipulated, even if the response speed of the blockchain 220 is quite low, the response speed of the storage system 200 will not be impacted significantly. Therefore, with the implementation of the present disclosure, existing cloud databases can be updated, so that a reliable and high-efficiency co-ownership database can be provided.

### Example Process

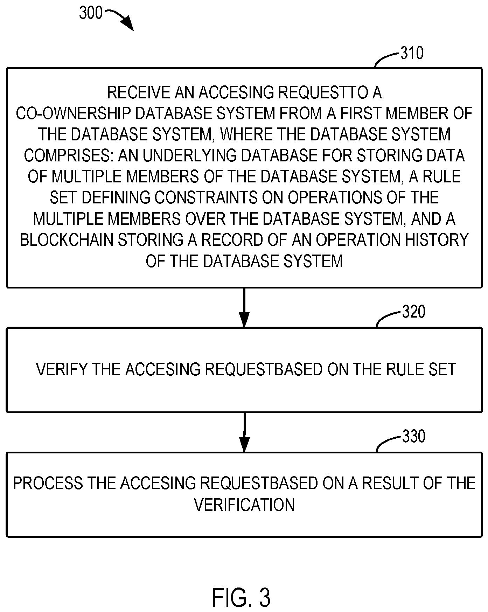

Fig. 3 illustrates a flowchart of a method 300 for managing a database system according to one implementation of the present disclosure. The method 300 may be executed, for example, by the database management system 122 shown in Fig. 2.

In 310, an accessing request to the database system 200 is received from one member (referred to as "a first member") among multiple members. As described above, the database system 200 comprises the underlying database 210, the blockchain 220 and the rule set 222.

Accessing requests, which may include various types, are for requesting corresponding manipulations of the database system 200, such as create a database system, add a new member of the database system, remove an existing member, add/delete/modify the rule set, add/delete/modify a data table in the database system, etc. These accessing requests may be defined in a language like Structured Query Language (SQL), and/or defined using any other format, no matter whether they are currently known or to be developed later.

In 320, the accessing request received in 310 is verified based on the rule set 222. As described above, the rule set 222 defines constraints of multiple members on operations to the database system.

In order to support data to be securely and effectively shared among multiple members, a rule in the rule set 222 at least indicates the access permission of each member for various objects stored in the database system 200. Here, the "object" refers to a data structure for organizing data in the database system 200 (including the underlying database 210, the blockchain 220 and the rule set 222), via which data structure members can access data in the database system 200. As an example, the object may be a data table in the underlying database 210, at which point members may modify data in the data table; or the object may be a rule set in the blockchain 220, at which point members may modify a rule in the rule set.

For example, based on different demands, different members may have different permissions. As an example, the rule set may specify: member X may modify all objects in the database system, and member Y should not modify any object. For another example, the rule set may specify: member Z may execute add/delete/modify data operations to some data table(s) in the underlying database 210, but should not execute add/delete/modify data operations to other data table.

The rule set 222 may be managed by means of any appropriate technique and may be stored and represented in any appropriate form. In some implementations, the management of the rule set may be realized based on SmartContracts technology. As is well known, SmartContracts is the computerized transaction protocol that executes the terms of a contract on top of a blockchain. By writing rule sets and managing related business logic with SmartContracts, it helps to reduce various costs for implementing the solution of the present disclosure at least to some extent. Of course, this is not essential; in other implementations, the management of rule sets may further be implemented by using any programming language.

In one implementation, the rule set 222 may comprise content regarding a member joining/quitting the database system 200. For example, when receiving a request for joining from a new member, it may be decided whether the new member is accepted based on a voting result of existing members. Rules may define with how many approvals from existing members, can a new member be added (for example, a percentage of approvals may be set). For example, if the rules define "all members," then a new member is allowed to join only with approvals from all members. For another example, if the rules define "50%," then a new member can be added when 50% of members approve. In this implementation, a membership list may be used to maintain the list of multiple members of the database system 200.

In one implementation, the rule set 222 may comprise a rule list, for maintaining the latest rules that are currently effective in the database system 200. When performing various operations to the rule list (e.g. add a new rule, delete an existing rule, or modify an existing rule, etc.), it may be decided based on voting of various members whether to execute these operations. Members may process rules in the list according to their own permissions, and save the latest rules in the rule list.

It may be appreciated there may exist various types of objects in the database system 200, for example, objects may include the foregoing membership list and rule list, data tables in the underlying database, or other objects. For different types of objects, different types of operations may be performed. For example, regarding the membership lists, a new member may be added, and an existing member may be removed; regarding a data table, data therein may be inserted/deleted/modified, etc. The rule set 222 defines constraints of multiple members on various objects, as a basis for verification.

In 330, the accessing request received in 310 is processed based on a verification result of the accessing request in 320, and further an operation defined in the accessing request is executed in the database system 200. For example, where the accessing request relates to "deleting a specific data table from the database system 200," if it is determined based on the rule set that the first member may execute the operation in the accessing request, then the specific data table may be deleted from the database system 200. Otherwise, if the accessing request is verified as invalid, i.e. does not meet the constraint on the first member as specified in the rule set, then the accessing request will be rejected.

According to the implementation of the present disclosure, in 330 it may be judged based on the rule set 222 whether the first member has the right to execute the requested operation to a corresponding object. If it is confirmed the accessing request conforms to related regulations in the rule set 222, then the first member is allowed to execute the accessing request; otherwise the first member may be rejected to execute the accessing request.

In some implementations, the rule set 222 may further define constraints which need to be satisfied when processing the accessing request. For example, assume the accessing request is a creating request for creating a new object in the underlying database 210. If the rule set 222 provides a new data table can be created only with at least 50% of member approvals, then the creating request may be broadcast to multiple members in 330. Only when approvals are received from at least 50% of members, will a new table be created in the database system. Otherwise, the accessing request of the first member will be rejected.

In this way, based on definitions in the rule set 222, multiple members may execute corresponding operations to the database system in accordance with their respective access permissions, and further a co-ownership database system may be realized. In particular, by storing the rule set 222, which defines access permissions, in the secure blockchain 220, the rule set 222 can be effectively prevented from being tampered, which in turn ensures the security of access to data in the underlying database 210.

In one implementation, if an accessing request from a member relates to modifying the rule set, then the accessing request may be directly executed in the blockchain. In one implementation, data of multiple data is stored in the underlying database 210; if the accessing request relates to the underlying database 210, then the accessing request needs to be executed to the underlying database 210. Specifically, the accessing request may be parsed as an operation instruction for accessing the underlying database 210, and the operation instruction may be executed in the underlying database 210. Assume the underlying database 210 is a conventional relational database, then the accessing request may be translated into a conventional SQL statement, and subsequently the SQL is executed in the relational database, so that the members may access related data in the relational database.

### Setting of Rule Set

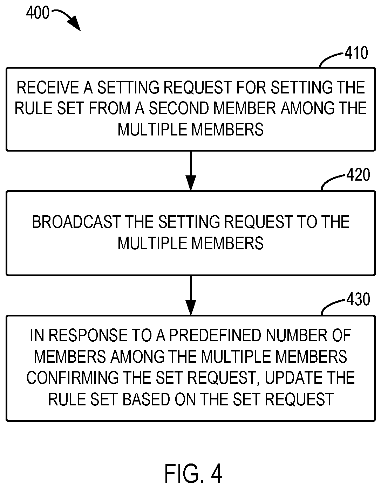

In one implementation, one or more members among multiple members as the co-owner of the database system may set rules in the rule set 220. Fig. 4 shows an example flowchart of a method 400 for modifying the rule set.

As shown in this figure, in 410 a setting request for setting the rule set 222 is received from a member (referred to as "a second member") among multiple members. The second member may be either the same as or different than the first member as described above with reference to Fig. 3. In 420 the setting request received in 410 is broadcast to multiple members. Next in 430, if an acknowledgment of the setting request is received from at least one member among multiple members, then the setting request is executed to the rule set.

Operations related to setting rules in the rule set have been described. These operations concerning setting rules may be called in various cases. For example, in response to a new object being created in the database system 200, a new rule may be set to the new object; or modifications may be made to an existing object in the database system 200. In view of these two cases, the update of the rule set 222 may include adding one or more new rules, and/or modifying one or more existing rules in the rule set 222.

Now description is presented to one example of setting the rule set. Assume the first member gets approvals from at least 50% of members and has created a new data table "T1" in the underlying database 210. At this point a new rule may be added separately for the new data table "T1." For example, one rule may specify that the data table "T1" is readable to all members. That is, any member may read data in the data table "T1" without the approval of other member. For another example, another rule may specify that deleting data from the data table "T1" must be approved by all members. At this point, if any member desires to delete data from the data table "T1," he/she must get approvals from all members. After a period of time, when one of multiple members wishes to modify an existing rule concerning the data table "T1," the request may be broadcast to multiple members. Only after obtaining approvals from sufficient members, the existing rule may be modified.

### Example of Access to Database System

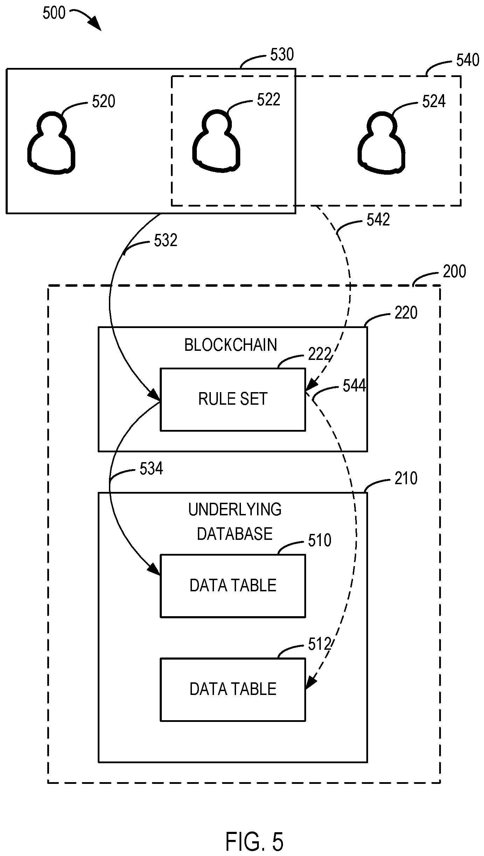

According to regulations of the rule set 222 (the rule set 222 is stored in the blockchain 220), multiple members may create objects in the database system 200 and set corresponding rules for created objects. In this way, a co-ownership database system may be realized. With reference to Fig. 5, description is presented below to how to perform access to the co-ownership database system.

Fig. 5 shows a block diagram 500 of accessing the co-ownership database system by multiple members according to one implementation of the present disclosure. As shown in Fig. 5, multiple members (3 in this example) 520, 522 and 524 are the co-owner of the database system 200, and data (e.g. organized in data tables 510 and 512) is included in the underlying database 210 of the database system 200. In this example, suppose a rule in the rule set 222 provides: the members 520 and 522 can access the data table 510 and the members 522 and 524 can access the data table 512. Based on this rule, different members may have different access permissions over different portions in the database system 200.

As shown by a solid box 530 in Fig. 5, where any one of the members 520 and 522 issues 532 an accessing request to the database system 200, the request will be verified based on the rule set 222. If the request is directed at the data table 510, then the request will be verified as valid. At this point, the members 520 and 522 are allowed to access 534 the data table 510. If the request from the member 520 is directed to the data table 512, then the request will be verified as invalid based on the rule set 222 and thus rejected.

Similarly, as shown by a dashed box 540 in Fig. 5, if any one of the members 522 and 524 issues 542 an accessing request to the data table 512, then the request will be verified as valid based on the rule set 222, and the data table 512 will be allowed to be accessed. On the other hand, if the member 524 requests to access the data table 510, then the request will be rejected based on the rule set 222.

Though Fig. 5 schematically shows the situation that the three members 520, 522 and 524 access the two data tables 510 and 512 in the database system 200, in other examples there may exist more members and more objects, and further there may be more complex rules. At this point, various members may access corresponding objects in the database system based on definition in the rule set. Further, by modifying rules in the rule set, more flexible access control may be carried out on the database system in accordance with needs of various members.

### Trace Operation History of Database System

In some implementations, to further increase the trustworthiness of the database system, records descriptive of the operation history of the database system 200 are stored periodically, and stored records are linked to a timestamping service (e.g. provided by a third party) independent of the database system 200. In the present disclosure, "linked" means storing a copy of stored records to a timestamp server and timestamping the stored copy to provide a basis for identifying the copy. Since the timestamping service is a third-party service, the provider of the database system 200 cannot modify copies at the timestamp server. Therefore, a stored copy external to the database system 200 may be used for confirming the operation history of the database system 200 within a time period associated with the copy. For the sake of description, the "timestamping service" may be served as "an external timestamping service" below, which is relative to the database system 200.

In this implementation, if a certain operation to the database system 200 is considered to be suspicious, then a copy of records associated with the suspicious operation is obtained from the external timestamping service, the copy indicating the operation history of the database system 200 within a time period associated with the copy. On the other hand, records associated with operations may be obtained internally from the database system 200. By comparing the copy from the external timestamp server with the records, it can be confirmed whether the suspicious operation is trustworthy or not. Specifically, if the copy externally from the database system 200 matches the records internally from the database system 200, then it means the operation is trustworthy; otherwise it can be considered the operation is an illegal operation. In this implementation, the operation history of the database system 200 comprises: an operation history of the underlying database 210 and an operation history of the rule set 222. If an operation to any of the underlying database 210 and the rule set 222 is considered to be suspicious, then it can be confirmed based on the foregoing method whether the operation is trustworthy.

With reference to concrete examples, more exemplary details about confirming will be discussed below. For example, still with reference to Fig. 5, suppose records descriptive of the operation history of the database system 200 will be linked to the timestamping service every other hour, then copies of records of the operation history every hour since the database system 200 is initiated are stored in the timestamp server, and according to timestamps of various copies it may be learned each copy corresponds to records of which time period of the operation history. Suppose the member 520 of the database system 200 doubts the member 522, in private, tampers with data in the data table 510 in accessing request A (e.g. the request is executed at 13:05 on January 1, 2017), then whether the accessing request A is trustworthy or not may be confirmed in a manner as below.

Based on the time when the accessing request A takes place, a record of the operation history of the database system 200 in a time period associated with the accessing request A (i.e. records of the operation history between 13:00 and 14:00 on January 1, 2017) may be obtained internally from the database system 200. Further, a copy of the record of the operation history between 13:00 and 14:00 on January 1, 2017 may be obtained from the external timestamping service. Through comparison, if the record internally from the database system 200 matches the record copy from the external timestamping service, then it is proved the accessing request A really happens between 13:00 and 14:00 on January 1, 2017 and the accessing request A is trustworthy. Otherwise, the accessing request is an illegal operation. It is to be understood that the temporal order for obtaining the internal record and the external record copy is not subjected to a constraint.

It is noteworthy the time cycle that records of the operation history are linked to the external timestamping service will affect "time granularity" of the confirm operation. For example, if records of the operation history are linked to the external timestamping service at time intervals of 10 minutes, then it may be confirmed at finer time granularity in which time period the accessing request happens, as compared to hourly linking records of the operation history to the external timestamping service.

In some implementations, in order to reduce the data amount of the linked operation history, records of the operation history may be processed first. In one implementation, a record of the operation history is stored to the blockchain 220, and an index is created for the record in the blockchain. Afterwards, the index instead of the original record is linked to the external timestamping service. Since the data amount of the index is far smaller than the data amount of the raw record and characteristics of the raw record still can be kept, no high time and space overheads will be caused.

Various approaches may be used for creating indexes for records in the blockchain 222. For example, an index may be creased based on a hash algorithm. Based on the hash algorithm, a large amount of records related to the operation history may be mapped to hash values with a smaller data amount. At this point, only a copy of the hash value needs to be stored to the external timestamping service. When confirming whether a given accessing request is suspicious, the copy of the hash value obtained from the external timestamping service may be compared with a hash value obtained from the database system 200 to see if they match each other, and then it can be confirmed whether the accessing request is trustworthy. In this implementation, indexes may be created for records of the operation history based on various hash algorithms that are currently known or to be developed later.

In one implementation, an index may be created based on a Merkle tree. First of all, a Merkle tree is created as an index by taking a targeted record as a leaf node. As well known, Merkle is a tree structure, which may be, for example, a binary tree or a multi-way tree. Leaf nodes of the Merkle tree may have values (including to-be-stored data about the operation history), and values of non-leaf nodes are calculated according to values of all lower-level leaf nodes. For example, in the Merkle hash tree, a leaf node may store to-be-saved data, and a non-leaf node stores a hash value of a series character string of a child node of the non-leaf node. At this point, a copy of the root of the Merkle tree may be stored to the external timestamping service and timestamped by the external timestamping service.

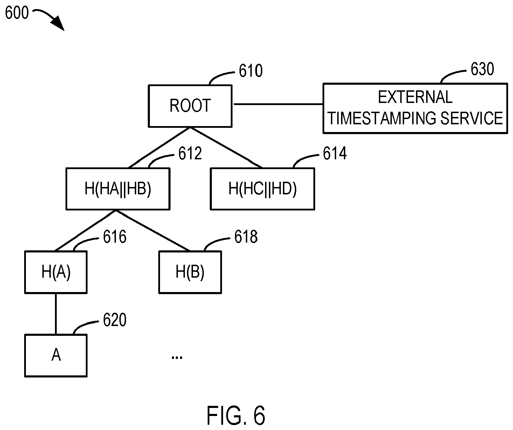

Fig. 6 shows a schematic view of a Merkle tree-based index 600 according to one implementation of the present disclosure. In the example of Fig. 6, the index may be constructed based on a Merkle tree, wherein various leaf nodes store records of the operation history of the database system 200 within a specified time period (e.g. 1 hour), and a root 610 is a root node of the index created for records of the operation history. It is to be understood that, for the sake of simplicity, only one leaf node 620 is shown while other leaf nodes are ignored.

In one implementation, a node 616 may store a hash value H (A) of content A in the node 620, a node 622 may store a hash value of a string determined by connecting strings in the nodes 616 and 618 in series, and the root 610 may store a hash value of a string determined by connecting strings in the nodes 612 and 614 in series. In this way, records of the operation history within the specified time period as stored in various leaf nodes are mapped to the root 610. It is to be understood that, according to the number of records within the specified time period, the Merkle tree may have different numbers of leaf nodes, so the Merkle tree will also have different numbers of levels. At this point, a copy of the root 610 may be stored to external timestamping service 630 to serve as a comparison basis for confirm operation in future.

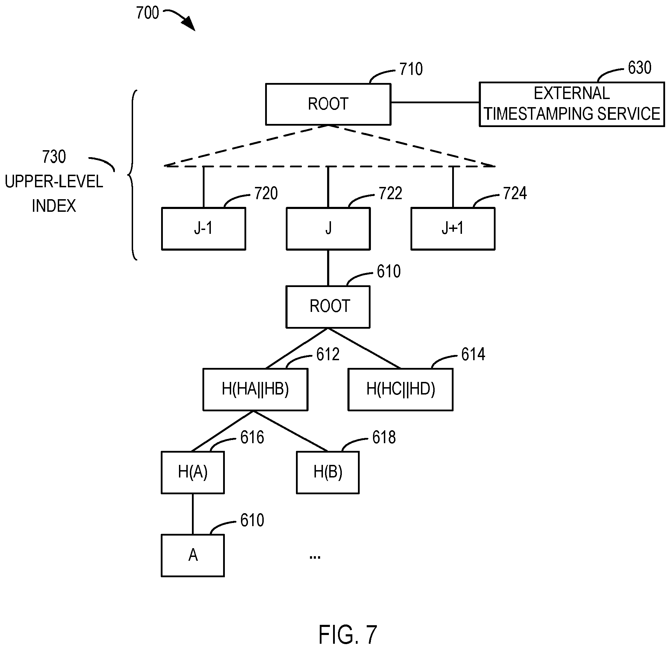

To establish associations between records of the operation history of the database system 200, in some implementations, with respect to various blocks in the blockchain 222, indexes may be created for records of the operation history within each time period. Then an upper-level index may be formed based on these indexes. Further, a copy of the upper-level index may be stored to the external timestamping service 630. In this way, the operation history in various time periods since the database system 200 is initiated may be reflected in the upper-level index incrementally. Such an embodiment will be described below with reference to Fig. 7.

Fig. 7 shows a schematic view of a Merkle tree-based index according to one implementation of the present disclosure. As shown in this figure, indexes of the operation history within different time periods as shown in Fig. 6 act as leaf nodes so as to construct an upper-level index 730. Specifically, a node 722 corresponds to an index of the operation history within the J time period, which corresponds to the constructed root 610 of the Merkle tree as described with reference to Fig. 6; a node 720 may correspond to an index of the operation history within the preceding time period (e.g. the J-1 time period); and a node 724 may correspond to an index of the operation history within the following time period (e.g. the J+1 time period).

As shown in Fig. 7, records of the operation history of the database system 200 in three consecutive time periods are mapped to a root 710. Thus, only by linking the root 710 to the external timestamping service, it may be confirmed according to the foregoing principle whether accessing requests within various time periods of the operation history are trustworthy.

Although Fig. 7 shows an upper-level index is constructed based on indexes of the operation history within three consecutive time periods, further an upper-level index relating to more or less time periods of the operation history may be constructed based on a similar principle. Further it should be understood Fig. 7 only illustrates one example of the index, while in other implementations other approaches may further be used for creating an index of the operation history so long as the index may save information on the operation history of the database system 200 for use in confirm operation later.

With reference to the example shown in Fig. 7, description is presented below to the process of confirming an accessing request. In one implementation, after receiving a confirming request for confirming an accessing request, a copy of an index associated with the accessing request is obtained from the external timestamping service. At this point, the index associated with the accessing request may be obtained based on internal data of the database system 200, the obtained copy is compared with the index to see if they match, and thus it is confirmed whether the accessing request is trustworthy. It is to be understood though first the copy of the index is obtained from the external timestamping service in the foregoing implementation, an execution order of the two obtain steps is not limited here. In other implementations, further the index may be obtained based on internal data of the database system 200 first, or the index may be obtained while the copy of the index is obtained.

For the sake of discussion, suppose it is desirable to confirm whether the accessing request A is trustworthy. As shown in Fig. 7, the operation history associated with the accessing request A is stored in the leaf node 610. At this point, an index, i.e. the root 710 of the Merkle tree may be obtained from the database system 200. In the Merkle tree-based index, a Merkle tree may be re-constructed based on the leaf node 610 associated with the accessing request A and other related nodes. For example, information of a father node may be calculated based on information of two children nodes. Finally, information of the root 710 of the Merkle tree may be obtained. Specifically, in the example of Fig. 7, a hash value of the node 616 may be calculated based on the leaf node 610, a hash value of the node 612 may be calculated based on the leaf nodes 616 and 618, and so on and so forth, information of the root 710 may be obtained.

Further, a copy of the index for the operation history within a time period when the accessing request A is executed is obtained from the external timestamping service 630. By comparing the index represented by the root 710 with the externally obtained copy of the index, it can be determined whether they match, and further it can be confirmed whether the accessing request A is trustworthy. Specifically, if the root 710 matches with the copy from the external timestamping service 630, this means the accessing request A is trustworthy; otherwise, it is considered the accessing request A is not trustworthy.

In one implementation, further it may be traced which operations are performed in the database system 200 within a time period. For example, to dismiss suspicion between multiple members of the database system 200, a member may be supported to trace operations performed by other members to the database system 200 within a given time period. Generally speaking, such a query is triggered by a tracing request, which may be regarded as a query on one or more operations performed to the database system within a given time period.

Suppose the member 520 wants to trace the operation history of the database system 200 performed by the member 522. The member 520 may specify in a tracing request that all operations performed by the member 522 on the whole day of January 1, 2017 are to be queried. It is to be understood that, since records have stored the operation history performed to the database system 200 in each time period, when receiving the tracing request from the member 520, one or more operations performed by the member 522 to the database system 200 on January 1, 2017 may be looked up in records, and the one or more operations are returned as a query result.

In some implementations, it may further be confirmed based on a rule in the rule set 222 whether a member issuing a tracing request has right to trace the operation history of the database system. For example, in one implementation, besides specifying a time period, other filtering condition may be set in the tracing request. For example, it may be specified to trace one or more of: operations performed by a certain member, operations on a certain object in the database system, etc.

It should be appreciated the above described confirming an accessing request and querying operations within a given time period may be combined with each other. For example, in one implementation, after successfully obtaining a query result, it may be confirmed whether one or more accessing requests contained in the query result are legal. As an example, still suppose the member 520 wants to query all operations performed by the member 522 to the database system 200 on January 1, 2017. If the member 520 considers the accessing request A contained in the query result being returned is suspicious, then he/she may select the accessing request to further confirm whether the accessing request is trustworthy. An example of the confirm action here has been described with reference to Fig. 7 and thus is ignored.

Alternatively or additionally, in some implementations, to record in more detail various operation histories of the database system, various information concerning operations to the underlying database 210 may further be saved in records. For example, it is to be understood when an accessing request is executed in the underlying database 210, typically the accessing request needs to be translated into operation instructions supported by the underlying database 210. At this point, logs associated with these operation instructions (e.g. logs generated by these operation instructions in the underlying database 210) may be construed as related data reflecting operation histories, and thus the data may be stored to records in the blockchain. For example, various items in logs generated by executing these operation instructions may be recorded in the operation history. Further, states of the rule set when executing these operation instructions may be recorded for the purpose of verification later. For example, logs of the rule list and the membership list, in the rule set 222, associated with operation instructions may be recorded in the operation history.

Further, in some implementations, an index may be created for the stored records based on the above fashion. Moreover, the created index may be added to a leaf node in the upper-level index 730 as shown in Fig. 7, and subsequently the final root 710 is generated. At this point, the root 710 may further include historical data of various operations to the underlying database 210.

In one implementation, any data that helps to later confirm the operation history of the underlying database 210 may be stored to records. Since the present disclosure may use any database that is currently known or to be developed as the underlying database 210, at this point various services provided by the provider of the underlying database 210 may be fully utilized to record the operation history of the underlying database 210. For example, logs of the underlying database 210 may be saved to records, and further state information of the underlying database 210 may be saved to records.

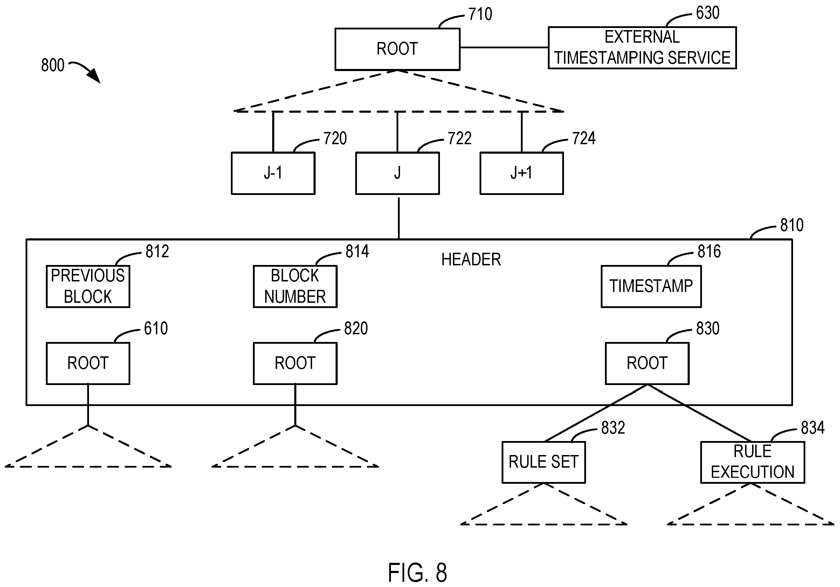

Fig. 8 shows a schematic view of a Merkle tree-based index 800 according to another implementation of the present disclosure. Like the index shown in Fig. 7, the structure of Fig. 8 differs in further including a header 810 for encapsulating the root 610 shown in Fig. 7. In addition, the header 810 may further include other information. In one implementation, the header 810 may include one or more information as below: information 812 of the previous block in the blockchain, a block number 814 of the current block in the blockchain, and a timestamp 816 of creation time of the header 810.

Roots 820 and 830 in Fig. 8 are similar to the root 610 in Fig. 6 and also are constructed in the same way as the root 610, which is ignored here. Various roots 610, 820 and 830 may be construed as roots of indexes created for storing different aspects of records of the database system 200. For example, a leaf node of a Merkle tree associated with the root 610 may store information descriptive of logs and states of operation histories of various data tables in the underlying database 210; a leaf node of a Merkle tree associated with the root 820 may store information on various operations over the database system 200, etc. A Merkle tree associated with the root 830 may further include a subtree, wherein a leaf node of a left subtree 820 stores the operation history associated with the rule set, and a leaf node of a right subtree 830 stores the operation history associated with rule execution.

The index 800 allows tracing operation histories of various members over the database system 200. For example, when it is desired to confirm an accessing request executed by a certain member over the rule set, the root node 710 may be re-constructed based on information on a rule set node 832 and the accessing request, and the re-constructed root may be compared with a copy obtained from the external timestamping service so as to confirm whether the accessing request is trustworthy. For another example, when it is desired to confirm an accessing request executed in the underlying database 210, the root 710 may be re-constructed based on information on the root 610 and the accessing request.

Although a plurality of roots (the roots 610, 820 and 830) are encapsulated into the header 810 for tracing the operation history of the database system 200, in other implementations more or less roots may be included in accordance with needs of concrete application environments.

With the solution of the present disclosure, whether an operation performed on the database system 200 is trustworthy may be confirmed by tracing the operation history performed by a member on the database system 200 and comparing a copy of an index of the operation history stored at a third party service with a copy of the operation history obtained inside the database system 200.

In one implementation, multiple accessing requests from one or more members may be executed in parallel in the database system. In one implementation, it may be checked whether anomalies such as failures occur in the database system, for subsequent repair processing. In one implementation, various members may be charged accordingly, depending on their usage of various resources in the database system.

The functionally described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, a machine readable medium may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular implementations.

Although the present disclosure has been described in language specific to structural features and/or methodological acts, it is to be understood that the present disclosure specified in the appended claims is not necessarily limited to the specific features or acts described above. Rather, the specific features and acts described above are disclosed as example forms of implementing the claims.

## Claims

1. A device (100), comprising:
a processing unit (110);
a memory (120) coupled to the processing unit (110) and including instructions stored thereon, the instructions, when executed by the processing unit (110), causing the device (100) to perform acts for managing a co-ownership database system (200), the database system (200) comprising: an underlying database (210) for storing data of multiple members (520, 522, 524) of the database system (200), a rule set (222) defining constraints on operations of the multiple members (520, 522, 524) over the database system (200), and a blockchain (220) storing a record of an operation history of the database system (200), the acts comprising:
creating an index (600, 700, 800) for the record in the blockchain (220);
storing a copy of the index (600, 700, 800) to a timestamping service (630) external to the database system (200);
receiving (310) an accessing request to the database system (200) from a first member of the database system (200);
verifying (320) the accessing request based on the rule set (222), where the rule set is stored in the blockchain; and
processing (330) the accessing request based on a result of the verification;
wherein the index (600, 700, 800) is created and the copy of it stored periodically, the copy to be used for confirming the operation history of the database system (200) and whether an accessing request is trustworthy;
in response to receiving a confirming request for confirming the accessing request,
obtaining a first copy of an index (600, 700, 800) associated with the accessing request from the timestamping service (630);
obtaining a second index (600, 700, 800) associated with the accessing request based on the blockchain (220); and
in response to the first copy matching to the second index (600, 700, 800), confirming the accessing request as trustworthy

2. The device (100) of claim 1, wherein the acts further comprise setting the rule set (222), the setting comprising:
receiving (410) a setting request for setting the rule set (222) from a second member among the multiple members (520, 522, 524);
broadcasting (420) the setting request to the multiple members (520, 522, 524); and
in response to a predefined number of members among the multiple members (520, 522, 524) confirming the setting request, updating (420) the rule set (222) based on the setting request.

3. The device (100) of claim 1, wherein the verifying (320) the accessing request based on the rule set (222) comprises:
obtaining an object in the database system (200) which the accessing request relates to, and an operation to be performed on the object; and
verifying based on the rule set (222) whether the first member has the right to perform the operation on the object.

4. The device (100) of claim 1, wherein the processing (330) the accessing request comprises:
in response to determining the accessing request is a creating request for creating a new object in the underlying database (210),
broadcasting the creating request to the multiple members (520, 522, 524); and
in response to a predefined number of members among the multiple members (520, 522, 524) confirming the creating request, creating the new object in the underlying database (210).

5. The device (100) of claim 4, wherein the acts further comprise:
adding a constraint to the rule set (222), the constraint limiting an operation allowed to be performed on the new object by at least one member among the multiple members (520, 522, 524).

6. The device (100) of claim 1, wherein
the creating an index (600, 700, 800) for the record comprises creating a Merkle tree as the index (600, 700, 800) by taking the record as a leaf node; and
the storing the copy to the timestamping service (630) external to the database system (200) comprises storing a copy of a root (610, 710) of the Merkle tree to the timestamping service (630).

7. The device (100) of claim 6, wherein the acts further comprise:
receiving a tracing request that queries operations performed on the database system (200) within a time period; and
returning a query result based on the record in the blockchain (220).

8. The device (100) of claim 7, wherein the acts further comprise:
in response to receiving a confirming request for confirming an operation in the query result, obtaining a copy of an index (600, 700, 800) associated with the operation from the timestamping service (630);
obtaining an index (600, 700, 800) associated with the operation based on the blockchain (220); and
in response to the copy matching to the index (600, 700, 800), confirming the operation as trustworthy.

9. The device (100) of claim 1, wherein the processing (330) the accessing request comprises:
in response to the accessing request relating to the underlying database (210), parsing the accessing request as an operation instruction for an access to the underlying database (210); and
executing the operation instruction in the underlying database (210).

10. The device (100) of claim 9, wherein the acts further comprise:
storing a log associated with the operation instruction to a record in the blockchain (220);
creating a further index for the record in the blockchain (220); and
merging the further index to the index (600, 700, 800).

11. A computer-implemented method for managing a co-ownership database system (200), the database system (200) comprising: an underlying database (210) for storing data of multiple members (520, 522, 524) of the database system (200), a rule set (222) defining constraints on operations of the multiple members (520, 522, 524) over the database system (200), and a blockchain (220) storing a record of an operation history of the database system (200), the method comprising:
creating an index (600, 700, 800) for the record in the blockchain (220);
storing a copy of the index (600, 700, 800) to a timestamping service (630) external to the database system (200);
receiving (310) an accessing request to the database system (200) from a first member of the database system (200);
verifying (320) the accessing request based on the rule set (222) where the rule set is stored in the blockchain; and
processing (330) the accessing request based on a result of the verification;
wherein the index (600, 700, 800) is created and the copy of it stored periodically, the copy to be used for confirming the operation history of the database system (200) and whether an accessing request is trustworthy;
in response to receiving a confirming request for confirming the accessing request,
obtaining a first copy of an index (600, 700, 800) associated with the accessing request from the timestamping service (630);
obtaining a second index (600, 700, 800) associated with the accessing request based on the blockchain (220); and
in response to the first copy matching to the second index (600, 700, 800), confirming the accessing request as trustworthy.

12. A computer program product being tangibly stored on a non-transient computer storage medium and comprising machine-executable instructions, the machine-executable instructions, when executed by a device, causing the device to perform acts for managing a co-ownership database system (200), the database system (200) comprising: an underlying database (210) for storing data of multiple members (520, 522, 524) of the database system (200), a rule set (222) defining constraints on operations of the multiple members (520, 522, 524) over the database system (200), and a blockchain (220) storing a record of an operation history of the database system (200), the acts comprising:
creating an index (600, 700, 800) for the record in the blockchain (220);
storing a copy of the index (600, 700, 800) to a timestamping service (630) external to the database system (200);
receiving (310) an accessing request to the database system (200) from a first member of the database system (200);
verifying (320) the accessing request based on the rule set (222) where the rule set is stored in the blockchain; and
processing (330) the accessing request based on a result of the verification;
wherein the index (600, 700, 800) is created and the copy of it stored periodically, the copy to be used for confirming the operation history of the database system (200) and whether an accessing request is trustworthy;
in response to receiving a confirming request for confirming the accessing request,
obtaining a first copy of an index (600, 700, 800) associated with the accessing request from the timestamping service (630);
obtaining a second index (600, 700, 800) associated with the accessing request based on the blockchain (220); and
in response to the first copy matching to the second index (600, 700, 800), confirming the accessing request as trustworthy.

## Patentansprüche

1. Vorrichtung (100), umfassend:
eine Verarbeitungseinheit (110);
einen Speicher (120), der mit der Verarbeitungseinheit (110) gekoppelt ist und Anweisungen darauf gespeichert aufweist, wobei die Anweisungen bei Ausführung durch die Verarbeitungseinheit (110) die Vorrichtung (100) veranlassen, Vorgänge zum Verwalten eines-Datenbanksystems (200) mit mehreren Miteigentümern durchzuführen, wobei das Datenbanksystem (200) umfasst: eine zugrunde liegende Datenbank (210) zum Speichern von Daten mehrerer Mitglieder (520, 522, 524) des Datenbanksystems (200), einen Regelsatz (222), der Einschränkungen für Operationen der mehreren Mitglieder (520, 522, 524) über das Datenbanksystem (200) definiert, und eine Blockchain (220), die einen Datensatz eines Betriebsverlaufs des Datenbanksystems (200) speichert, wobei die Vorgänge umfassen:
Erstellen eines Index (600, 700, 800) für den Datensatz in der Blockchain (220);
Speichern einer Kopie des Index (600, 700, 800) in einem Zeitstempelungsdienst (630) außerhalb des Datenbanksystems (200);
Empfangen (310) einer Zugriffsanforderung für das Datenbanksystem (200) von einem ersten Mitglied des Datenbanksystems (200);
Überprüfen (320) der Zugriffsanforderung basierend auf dem Regelsatz (222), wobei der Regelsatz in der Blockchain gespeichert ist; und
Verarbeiten (330) der Zugriffsanforderung basierend auf einem Ergebnis der Überprüfung;
wobei der Index (600, 700, 800) erstellt und die Kopie davon periodisch gespeichert wird, wobei die Kopie zum Bestätigen des Betriebsverlaufs des Datenbanksystems (200) und der Vertrauenswürdigkeit einer Zugriffsanforderung verwendet werden soll;
als Reaktion auf das Empfangen einer Bestätigungsanforderung zum Bestätigen der Zugriffsanforderung
Erhalten einer ersten Kopie eines Index (600, 700, 800), der der Zugriffsanforderung zugeordnet ist, vom Zeitstempelungsdienst (630);
Erhalten eines zweiten Index (600, 700, 800), der der Zugriffsanforderung zugeordnet ist, basierend auf der Blockchain (220); und
als Reaktion darauf, dass die erste Kopie mit dem zweiten Index (600, 700, 800) übereinstimmt, Bestätigen der Zugriffsanforderung als vertrauenswürdig.

2. Vorrichtung (100) nach Anspruch 1, wobei die Vorgänge ferner das Festlegen des Regelsatzes (222) umfassen, wobei das Festlegen umfasst:
Empfangen (410) einer Festlegungsanforderung zum Festlegen des Regelsatzes (222) von einem zweiten Mitglied unter den mehreren Mitgliedern (520, 522, 524);
Senden (420) der Festlegungsanforderung per Broadcast an die mehreren Mitglieder (520, 522, 524); und
als Reaktion darauf, dass eine vordefinierte Anzahl von Mitgliedern unter den mehreren Mitgliedern (520, 522, 524) die Festlegungsanforderung bestätigt, Aktualisieren (420) des Regelsatzes (222) basierend auf der Festlegungsanforderung.

3. Vorrichtung (100) nach Anspruch 1, wobei das Überprüfen (320) der Zugriffsanforderung basierend auf dem Regelsatz (222) umfasst:
Erhalten eines Objekts im Datenbanksystem (200), auf das sich die Zugriffsanforderung bezieht, und einer an dem Objekt durchzuführenden Operation; und
Überprüfen basierend auf dem Regelsatz (222), ob das erste Mitglied das Recht hat, die Operation an dem Objekt durchzuführen.

4. Vorrichtung (100) nach Anspruch 1, wobei das Verarbeiten (330) der Zugriffsanforderung umfasst:
als Reaktion auf das Feststellen, dass die Zugriffsanforderung eine Erstellungsanforderung zum Erstellen eines neuen Objekts in der zugrunde liegenden Datenbank (210) ist,
Senden der Erstellungsanforderung per Broadcast an die mehreren Mitglieder (520, 522, 524); und
als Reaktion darauf, dass eine vordefinierte Anzahl von Mitgliedern unter den mehreren Mitgliedern (520, 522, 524) die Erstellungsanforderung bestätigt, Erstellen des neuen Objekts in der zugrunde liegenden Datenbank (210).

5. Vorrichtung (100) nach Anspruch 4, wobei die Vorgänge ferner umfassen:
Hinzufügen einer Einschränkung zum Regelsatz (222), wobei die Einschränkung eine Operation einschränkt, die von mindestens einem Mitglied der mehreren Mitglieder (520, 522, 524) an dem neuen Objekt durchgeführt werden darf.

6. Vorrichtung (100) nach Anspruch 1, wobei
das Erstellen eines Index (600, 700, 800) für den Datensatz das Erstellen eines Merkle-Baums als Index (600, 700, 800) umfasst, indem der Datensatz als Blattknoten genommen wird; und
das Speichern der Kopie im Zeitstempelungsdienst (630) außerhalb des Datenbanksystems (200) das Speichern einer Kopie einer Wurzel (610, 710) des Merkle-Baums im Zeitstempelungsdienst (630) umfasst.

7. Vorrichtung (100) nach Anspruch 6, wobei die Vorgänge ferner umfassen:
Empfangen einer Verfolgungsanforderung, die Operationen abfragt, die innerhalb eines Zeitraums auf dem Datenbanksystem (200) durchgeführt werden; und
Zurückgeben eines Abfrageergebnisses basierend auf dem Datensatz in der Blockchain (220).

8. Vorrichtung (100) nach Anspruch 7, wobei die Vorgänge ferner umfassen:
als Reaktion auf das Empfangen einer Bestätigungsanforderung zum Bestätigen einer Operation im Abfrageergebnis Erhalten einer Kopie eines Index (600, 700, 800), der der Operation zugeordnet ist, vom Zeitstempelungsdienst (630);
Erhalten eines Index (600, 700, 800), der der Operation zugeordnet ist, basierend auf der Blockchain (220); und
als Reaktion darauf, dass die Kopie mit dem Index (600, 700, 800) übereinstimmt, Bestätigen der Operation als vertrauenswürdig.

9. Vorrichtung (100) nach Anspruch 1, wobei das Verarbeiten (330) der Zugriffsanforderung umfasst:
als Reaktion darauf, dass sich die Zugriffsanforderung auf die zugrunde liegende Datenbank (210) bezieht, Auflösen der Zugriffsanforderung als Betriebsanweisung für einen Zugriff auf die zugrunde liegende Datenbank (210); und
Ausführen der Betriebsanweisung in der zugrunde liegenden Datenbank (210).

10. Vorrichtung (100) nach Anspruch 9, wobei die Vorgänge ferner umfassen:
Speichern eines Protokolls, das der Betriebsanweisung zugeordnet ist, in einem Datensatz in der Blockchain (220);
Erstellen eines weiteren Index für den Datensatz in der Blockchain (220); und
Zusammenführen des weiteren Index mit dem Index (600, 700, 800).

11. Computerimplementiertes Verfahren zum Verwalten eines Datenbanksystems (200) mit mehreren Miteigentümern, wobei das Datenbanksystem (200) umfasst: eine zugrunde liegende Datenbank (210) zum Speichern von Daten mehrerer Mitglieder (520, 522, 524) des Datenbanksystems (200), einen Regelsatz (222), der Einschränkungen für Operationen der mehreren Mitglieder (520, 522, 524) über das Datenbanksystem (200) definiert, und eine Blockchain (220), die einen Datensatz eines Betriebsverlaufs des Datenbanksystems (200) speichert, wobei das Verfahren umfasst:
Erstellen eines Index (600, 700, 800) für den Datensatz in der Blockchain (220);
Speichern einer Kopie des Index (600, 700, 800) in einem Zeitstempelungsdienst (630) außerhalb des Datenbanksystems (200);
Empfangen (310) einer Zugriffsanforderung für das Datenbanksystem (200) von einem ersten Mitglied des Datenbanksystems (200);
Überprüfen (320) der Zugriffsanforderung basierend auf dem Regelsatz (222), wobei der Regelsatz in der Blockchain gespeichert ist; und
Verarbeiten (330) der Zugriffsanforderung basierend auf einem Ergebnis der Überprüfung;
wobei der Index (600, 700, 800) erstellt und die Kopie davon periodisch gespeichert wird, wobei die Kopie zum Bestätigen des Betriebsverlaufs des Datenbanksystems (200) und der Vertrauenswürdigkeit einer Zugriffsanforderung verwendet werden soll;
als Reaktion auf das Empfangen einer Bestätigungsanforderung zum Bestätigen der Zugriffsanforderung
Erhalten einer ersten Kopie eines Index (600, 700, 800), der der Zugriffsanforderung zugeordnet ist, vom Zeitstempelungsdienst (630);
Erhalten eines zweiten Index (600, 700, 800), der der Zugriffsanforderung zugeordnet ist, basierend auf der Blockchain (220); und
als Reaktion darauf, dass die erste Kopie mit dem zweiten Index (600, 700, 800) übereinstimmt, Bestätigen der Zugriffsanforderung als vertrauenswürdig.

12. Computerprogrammprodukt, das physisch auf einem nichtflüchtigen Computerspeichermedium gespeichert ist und maschinenausführbare Anweisungen umfasst, wobei die maschinenausführbaren Anweisungen bei Ausführung durch eine Vorrichtung die Vorrichtung veranlassen, Vorgänge zum Verwalten eines Datenbanksystems (200) mit mehreren Miteigentümern durchzuführen, wobei das Datenbanksystem (200) umfasst: eine zugrunde liegende Datenbank (210) zum Speichern von Daten mehrerer Mitglieder (520, 522, 524) des Datenbanksystems (200), einen Regelsatz (222), der Einschränkungen für Operationen der mehreren Mitglieder (520, 522, 524) über das Datenbanksystem (200) definiert, und eine Blockchain (220), die einen Datensatz eines Betriebsverlaufs des Datenbanksystems (200) speichert, wobei die Vorgänge umfassen:
Erstellen eines Index (600, 700, 800) für den Datensatz in der Blockchain (220);
Speichern einer Kopie des Index (600, 700, 800) in einem Zeitstempelungsdienst (630) außerhalb des Datenbanksystems (200);
Empfangen (310) einer Zugriffsanforderung für das Datenbanksystem (200) von einem ersten Mitglied des Datenbanksystems (200);
Überprüfen (320) der Zugriffsanforderung basierend auf dem Regelsatz (222), wobei der Regelsatz in der Blockchain gespeichert ist; und
Verarbeiten (330) der Zugriffsanforderung basierend auf einem Ergebnis der Überprüfung;
wobei der Index (600, 700, 800) erstellt und die Kopie davon periodisch gespeichert wird, wobei die Kopie zum Bestätigen des Betriebsverlaufs des Datenbanksystems (200) und der Vertrauenswürdigkeit einer Zugriffsanforderung verwendet werden soll;
als Reaktion auf das Empfangen einer Bestätigungsanforderung zum Bestätigen der Zugriffsanforderung
Erhalten einer ersten Kopie eines Index (600, 700, 800), der der Zugriffsanforderung zugeordnet ist, vom Zeitstempelungsdienst (630);
Erhalten eines zweiten Index (600, 700, 800), der der Zugriffsanforderung zugeordnet ist, basierend auf der Blockchain (220); und
als Reaktion darauf, dass die erste Kopie mit dem zweiten Index (600, 700, 800) übereinstimmt, Bestätigen der Zugriffsanforderung als vertrauenswürdig.

## Revendications

1. Dispositif (100) comprenant :
une unité de traitement (110) ;
une mémoire (120) couplée à l'unité de traitement (110) et sur laquelle sont stockées des instructions, lesdites instructions, lorsqu'elles sont exécutées par l'unité de traitement (110), amenant le dispositif (100) à effectuer des actes servant à gérer un système de base de données en copropriété (200), le système de base de données (200) comprenant : une base de données sous-jacente (210) pour stocker les données de multiples membres (520, 522, 524) du système de base de données (200), un ensemble de règles (222) définissant des contraintes sur les opérations des multiples membres (520, 522, 524) sur le système de base de données (200), et une chaîne de blocs (220) stockant un enregistrement d'un historique d'opérations du système de base de données (200), les actes comprenant :
la création d'un index (600, 700, 800) pour l'enregistrement dans la chaîne de blocs (220) ;
le stockage d'une copie de l'index (600, 700, 800) dans un service d'horodatage (630) externe au système de base de données (200) ;
la réception (310) d'une demande d'accès au système de base de données (200) provenant d'un premier membre du système de base de données(200) ;
la vérification (320) de la demande d'accès sur la base de l'ensemble de règles (222), l'ensemble de règles étant stocké dans la chaîne de blocs ; et
le traitement (330) de la demande d'accès sur la base d'un résultat de la vérification ;
dans lequel l'index (600, 700, 800) est créé et sa copie est stockée périodiquement, la copie devant être utilisée pour confirmer l'historique d'opération du système de base de données (200) et si une demande d'accès est digne de confiance ;
en réponse à la réception d'une demande de confirmation pour confirmer la demande d'accès,
l'obtention d'une première copie d'un index (600, 700, 800) associé à la demande d'accès provenant du service d'horodatage (630) ;
l'obtention d'un second index (600, 700, 800) associé à la demande d'accès sur la base de la chaîne de blocs (220) ; et
en réponse au fait que la première copie correspond au second index (600, 700, 800), la confirmation de la demande d'accès comme étant digne de confiance.

2. Dispositif (100) selon la revendication 1, dans lequel les actes comprennent en outre le réglage de l'ensemble de règles (222), le réglage comprenant :
la réception (410) d'une demande de réglage pour régler l'ensemble de règles (222) provenant d'un second membre parmi les multiples membres (520, 522, 524) ;
la diffusion (420) de la demande de réglage aux multiples membres (520, 522, 524) ; et
en réponse au fait qu'un nombre prédéfini de membres parmi les multiples membres (520, 522, 524) confirment la demande de réglage, la mise à jour (420) de l'ensemble de règles (222) sur la base de la demande de réglage.

3. Dispositif (100) selon la revendication 1, dans lequel la vérification (320) de la demande d'accès sur la base de l'ensemble de règles (222) comprend :
l'obtention d'un objet dans le système de base de données (200) auquel la demande d'accès se rapporte, et d'une opération à effectuer sur l'objet ; et
la vérification, sur la base de l'ensemble de règles (222), pour savoir si le premier membre a le droit d'effectuer l'opération sur l'objet.

4. Dispositif (100) selon la revendication 1, dans lequel le traitement (330) de la demande d'accès comprend :
en réponse à la détermination que la demande d'accès est une demande de création pour créer un nouvel objet dans la base de données sous-jacente (210),
la diffusion de la demande de création aux multiples membres (520, 522, 524) ; et
en réponse au fait qu'un nombre prédéfini de membres parmi les multiples membres (520, 522, 524) confirment la demande de création, la création du nouvel objet dans la base de données sous-jacente (210).

5. Dispositif (100) selon la revendication 4, dans lequel les actes comprennent en outre :
l'ajout d'une contrainte à l'ensemble de règles (222), la contrainte limitant une opération dont la réalisation est autorisée sur le nouvel objet par au moins un membre parmi les multiples membres (520, 522, 524).

6. Dispositif (100) selon la revendication 1, dans lequel
la création d'un index (600, 700, 800) pour l'enregistrement comprend la création d'un arbre de Merkle comme index (600, 700, 800) en prenant l'enregistrement comme noeud feuille ; et
le stockage de la copie dans le service d'horodatage (630) externe au système de base de données (200) comprend le stockage d'une copie d'une racine (610, 710) de l'arbre de Merkle dans le service d'horodatage (630).

7. Dispositif (100) selon la revendication 6, dans lequel les actes comprennent en outre :
la réception d'une demande de suivi qui interroge les opérations effectuées sur le système de base de données (200) pendant une période ; et
le renvoi d'un résultat de requête sur la base de l'enregistrement dans la chaine de blocs (220).

8. Dispositif (100) selon la revendication 7, dans lequel les actes comprennent en outre :
en réponse à la réception d'une demande de confirmation pour confirmer une opération dans le résultat de la requête, l'obtention d'une copie d'un index (600, 700, 800) associé à l'opération provenant du service d'horodatage (630) ;
l'obtention d'un index (600, 700, 800) associé à l'opération basée sur la chaîne de blocs (220) ; et
en réponse à la correspondance de copie avec l'index (600, 700, 800), la confirmation que l'opération est digne de confiance.

9. Dispositif (100) selon la revendication 1, dans lequel le traitement (330) de la demande d'accès comprend :
en réponse au fait que la demande d'accès est relative à la base de données sous-jacente (210), l'analyse de la demande d'accès en tant qu'instruction d'opération pour un accès à la base de données sous-jacente (210) ; et
l'exécution de l'instruction d'opération dans la base de données sous-jacente (210).

10. Dispositif (100) selon la revendication 9, dans lequel les actes comprennent en outre :
le stockage d'un journal associé à l'instruction d'opération dans un enregistrement dans la chaîne de blocs (220) ;
la création d'un autre index pour l'enregistrement dans la chaîne de blocs (220) ; et
la fusion de l'autre index avec l'index (600, 700, 800).

11. Procédé mis en oeuvre par ordinateur pour gérer un système de base de données en copropriété (200), le système de base de données (200) comprenant : une base de données sous-jacente (210) pour stocker des données de multiples membres (520, 522, 524) du système de base de données (200), un ensemble de règles (222) définissant des contraintes sur les opérations des multiples membres (520, 522, 524) sur le système de base de données (200), et une chaîne de blocs (220) stockant un enregistrement d'un historique d'opérations du système de base de données (200), le procédé comprenant :
la création d'un index (600, 700, 800) pour l'enregistrement dans la chaîne de blocs (220) ;
le stockage d'une copie de l'index (600, 700, 800) dans un service d'horodatage (630) externe au système de base de données (200) ;
la réception (310) d'une demande d'accès au système de base de données (200) provenant d'un premier membre du système de base de données (200) ;
la vérification(320) de la demande d'accès sur la base de l'ensemble de règles (222) où l'ensemble de règles est stocké dans la chaîne de blocs ; et
le traitement (330) de la demande d'accès sur la base d'un résultat de la vérification ;
dans lequel l'index (600, 700, 800) est créé et sa copie stockée périodiquement, la copie devant être utilisée pour confirmer l'historique d'opérations du système de base de données (200) et si une demande d'accès est digne de confiance ;
en réponse à la réception d'une demande de confirmation pour confirmer la demande d'accès,
l'obtention d'une première copie d'un index (600, 700, 800) associé à la demande d'accès provenant du service d'horodatage (630) ;
l'obtention d'un second index (600, 700, 800) associé à la demande d'accès sur la base de la chaîne de blocs (220) ; et
en réponse au fait que la première copie correspond au second index (600, 700, 800), la confirmation de la demande d'accès comme étant digne de confiance.

12. Produit programme d'ordinateur stocké de manière tangible sur un support d'enregistrement informatique non transitoire et comprenant des instructions exécutables par machine, les instructions exécutables par machine, lorsqu'elles sont exécutées par un dispositif, amenant le dispositif à effectuer des actes pour gérer un système de base de données en copropriété (200), le système de base de données (200) comprenant : une base de données sous-jacente (210) pour stocker les données de multiples membres (520, 522, 524) du système de base de données (200), un ensemble de règles (222) définissant des contraintes sur les opérations des multiples membres (520, 522, 524) sur le système de base de données (200), et une chaîne de blocs (220) stockant un enregistrement d'un historique d'opérations du système de base de données (200), les actes comprenant :
la création d'un index (600, 700, 800) pour l'enregistrement dans la chaîne de blocs (220) ;
le stockage d'une copie de l'index (600, 700, 800) dans un service d'horodatage (630) externe au système de base de données (200) ;
la réception (310) d'une demande d'accès au système de base de données (200) provenant d'un premier membre du système de base de données (200) ;
la vérification(320) de la demande d'accès sur la base de l'ensemble de règles (222) où l'ensemble de règles est stocké dans la chaîne de blocs ; et
le traitement (330) de la demande d'accès sur la base d'un résultat de la vérification ;
dans lequel l'index (600, 700, 800) est créé et sa copie stockée périodiquement, la copie devant être utilisée pour confirmer l'historique d'opérations du système de base de données (200) et si une demande d'accès est digne de confiance ;
en réponse à la réception d'une demande de confirmation pour confirmer la demande d'accès,
l'obtention d'une première copie d'un index (600, 700, 800) associé à la demande d'accès provenant du service d'horodatage (630) ;
l'obtention d'un second index (600, 700, 800) associé à la demande d'accès sur la base de la chaîne de blocs (220) ; et
en réponse au fait que la première copie correspond au second index (600, 700, 800), la confirmation de la demande d'accès comme étant digne de confiance.
